# EUROPEAN PATENT SPECIFICATION

(11) **EP 2 493 699 B1**
(45) Date of publication and mention of the grant of the patent: **19.06.2019**
(21) Application number: 10775855.9
(22) Date of filing: 27.10.2010
(51) Int. Cl.: B42D 15/00, G02B 3/00

(54) **SECURITY DEVICE AND METHOD OF MANUFACTURING THE SAME**
SICHERHEITSVORRICHTUNG UND VERFAHREN ZU IHRER HERSTELLUNG
DISPOSITIF DE SÉCURITÉ ET ET SON PROCÉDÉ DE FABRICATION

(30) Priority: 30.10.2009 GB 0919109; 30.10.2009 US 272771 P
(43) Date of publication of application: 05.09.2012
(73) Proprietor: De La Rue International Limited, Basingstoke RG22 4BS (GB)
(72) Inventor: COMMANDER, Lawrence, George, Tilehurst Reading RG31 6RR (GB); HOLMES, Brian, William, Fleet Hampshire GU515HZ (GB)
(74) Representative: Gill Jennings & Every LLP
(86) International application number: PCT/GB2010/001994
(87) International publication number: WO 2011/051669

(56) References cited:
- EP-A2- 0 238 043
- EP-A2- 0 323 108
- DE-A1-102005 039 113
- GB-A- 2 454 752
- US-A- 4 033 059

## Description

The invention relates to a security device, for example for use on articles of value such as banknotes, cheques, passports, identity cards, certificates of authenticity, fiscal stamps and other documents for securing value or personal identity.

Many different optical security devices are known of which the most common are holograms and other diffractive devices which are often found on credit cards and the like. It is also known to provide security devices in the form of moiré magnifiers as, for example, described in EP-A-1695121 and WO-A-94/27254. A disadvantage of moire magnifiers is that the artwork is more restricted, for instance an animation effect would not be possible with a moire magnifier.

It has also been known that so-called lenticular devices can be used as security devices as, for example, described in US-A-4892336. This specification describes two types of lenticular effect namely a tilt image effect in which, as the device is tilted, changes in colour or image are observed and a moving image effect in which an image is seen to move along the device as the viewing angle changes. The two effects could be combined together for example on one security thread so as the viewing angle changes, two different effects can be observed. However, these devices have been difficult to verify by the untrained observer.

US-A-2008/0309063 describes a security device constructed from sets of elongate lenses extending in different directions.

In accordance with a first aspect of the present invention, a security device comprises at least two lenticular devices, each lenticular device having an array of elongate lenticular focusing elements located above respective sets of image strips, wherein the elongate directions are orthogonal, characterized in that the two lenticular devices, when viewed at at least one viewing condition, for example perpendicularly, present a recognisable image to the naked eye of the observer made up by image portions from each lenticular device, wherein the image strips define different views of the respective image portion whereby as the security device is tilted about an axis parallel to the elongate direction of either of the lenticular devices, the respective image portion appears to move laterally while the other image portion remains stationary.

In accordance with a second aspect of the present invention, a method of manufacturing a security device comprises providing at least two lenticular devices, each lenticular device having an array of elongate lenticular focusing elements located above respective sets of image strips, wherein said elongate directions are orthogonal, characterized in that the two lenticular devices, when viewed at at least one viewing condition, for example perpendicularly, present a recognisable image to the naked eye of the observer made up by image portions from each lenticular device, wherein the image strips define different views of the respective image portion whereby as the security device is tilted about an axis parallel to the elongate direction of either of the lenticular devices, the respective image portion appears to move laterally while the other image portion remains stationary.

This invention provides a simple but secure device which can be easily verified by a user but which is difficult to manufacture. Since the elongate directions of the two arrays of lenticular focussing elements extend in different directions, when the device is tilted about an axis parallel with one of the directions, the lenticular effect will be observed from a corresponding lenticular device but no or a different effect will be observed from the other.

It is particularly convenient if the two elongate directions are orthogonal. In that case, when the device is tilted about the elongate axis of one device, no lenticular effect will be observed from the other device.

The two lenticular devices could be located in principle in any positions on the security device but preferably they are arranged adjacent one another, most preferably abutting one another. This makes it easier to locate the lenticular devices and also to compare the effects they produce when tilting the device in different orientations.

As will be explained in more detail below, this device presents a unique effect which is readily observable to verify the device but which is difficult to manufacture.

The periodicity and therefore maximum base diameter for the lenticular focussing elements is preferably in the range 5-200µm, more preferably 10-60µm and even more preferably 20-40µm. The f number for the lenticular focussing elements is preferably in the range 0.25-16 and more preferably 0.5-2.

Typically, the lenticular focusing elements comprise cylindrical lenses. However, micromirrors could be used.

The image strips can be simply printed onto the substrate although it is also possible to define the image strips using a relief structure. This enables much thinner devices to be constructed which is particularly beneficial when used with security documents.

The relief structures can be formed by embossing or cast-curing. Of the two processes mentioned, cast-curing provides higher fidelity of replication.

A variety of different relief structures can be used as will described in more detail below. However, the image strips could simply be created by embossing/cast-curing the images as diffraction grating areas. Differing parts of the image could be differentiated by the use of differing pitches or different orientations of grating providing regions with a different diffractive colour. Alternative (and/or additional differentiating) image structures are anti-reflection structures such as moth-eye (see for example WO-A-2005/106601), zero-order diffraction structures, stepped surface relief optical structures known as Aztec structures (see for example WO-A-2005/115119) or simple scattering structures. For most applications, these structures could be partially or fully metallised to enhance brightness and contrast.

Typically, the width of each image strip is less than 50 microns, preferably less than 20 microns, most preferably in the range 5-10 microns.

Typical thicknesses of security devices according to the invention are 2-100 microns, more preferably 20-50microns with lens heights of 1-50 microns, more preferably 5-25microns. The periodicity and therefore maximum base diameter for the lenticular focussing elements is preferably in the range 5-200µm, more preferably 10-60µm and even more preferably 20-40µm. The f number for the lenticular focussing elements is preferably in the range 0.25-16 and more preferably 0.5-2. The relief depth depends on the method used to form the relief where the relief is provided by a diffractive grating the depth would typically be in the range 0.05-1µm and where a coarser non diffractive relief structure is used the relief depth is preferably in the range 0.5-10µm and even more preferably 1-5µm.

The security device may comprise a metallised layer either as part of the image structures or as an additional layer. Preferably such a layer is selectively demetallised at a number of locations. In addition the device may further comprise a layer of resist upon the metallised layer. The metallised layer and/or the layer of resist is preferably arranged as indicia.

It is also preferred that the device is arranged to be machine-readable. This may be achieved in a number of ways. For example at least one layer of the device (optionally as a separate layer) may further comprise machine-readable material. Preferably the machine-readable material is a magnetic material, such as magnetite. The machine-readable material may be responsive to an external stimulus. Furthermore, when the machine-readable material is formed into a layer, this layer may be transparent.

The security device may be used in many different applications, for example by attachment to objects of value. Preferably, the security devices are adhered to or substantially contained within a security document. The security device may therefore be attached to a surface of such a document or it may be partially embedded within the document. The security device may take various different forms for use with security documents, these including a security thread, a security fibre, a security patch, a security strip, a security stripe or a security foil as non-limiting examples.

Some examples of security devices and methods according to the invention will now be described and contrasted with a known device with reference to the accompanying drawings, in which:-
Figure 1 is a schematic cross-section through a known lenticular device;
Figure 2 is a perspective view from above of a modified form of the known lenticular device of Figure 1;
Figure 3 illustrates the appearance of the device of Figure 2 at different tilt angles;
Figures 4 and 5 illustrate examples of lenticular devices combined with holographic devices;
Figure 6 is a cross-section through another example according to the invention;
Figures 7 and 7A-7H illustrate the appearances of another example of a device according to the invention at different viewing angles; and,
Figures 8A-8I illustrate different examples of relief structures defining image strips according to the invention.

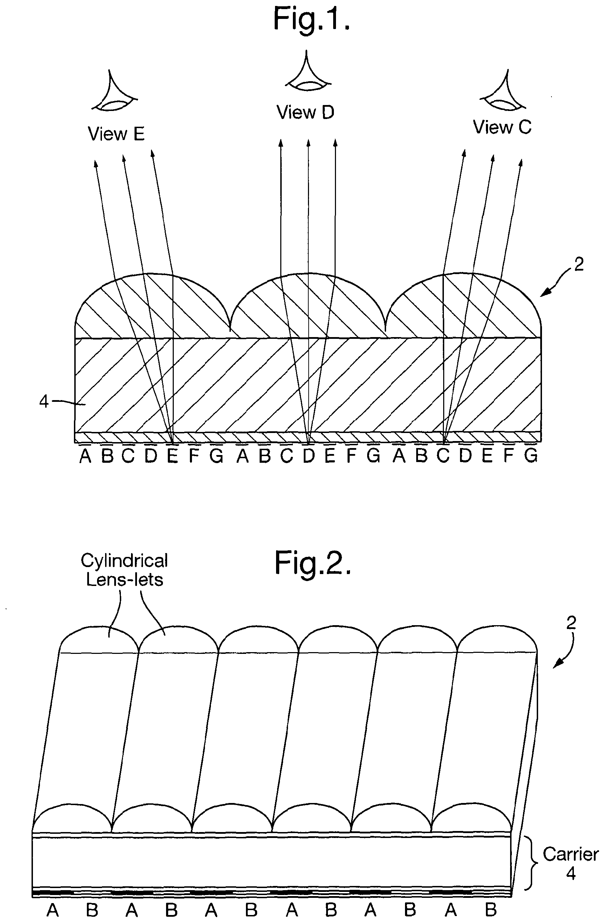

A known lenticular device is shown in Figures 1-3. Figure 1 shows a cross-section through the known lenticular device which is being used to view images A-G. An array of cylindrical lenses 2 is arranged on a transparent substrate 4. Each image is segmented into a number of strips, for example 10 and under each lens 2 of the lenticular array, there is a set of image strips corresponding to a particular segmented region of images A-G. Under the first lens the strips will each correspond to the first segment of images A-G and under the next lens the strips will each correspond to the second segment of images A-G and so forth. Each lens 2 is arranged to focus in the plane of the strips such that only one strip can be viewed from one viewing position through each lens 2. At any viewing angle, only the strips corresponding to one of the images (A,B,C etc.) will be seen through the corresponding lenses. As shown, each strip of image D will be seen from straight on whereas on tilting a few degrees off-axis the strips from images C or E will be seen.

The strips are arranged as slices of an image, i.e. the strips A are all slices from one image, similarly for B, C etc. As a result, as the device is tilted a series of images will be seen. The images could be related or unrelated. The simplest device would have two images that would flip between each other as the device is tilted. Alternatively, the images could be a series of images that are shifted laterally strip to strip generating a lenticular animation effect so that the image appears to move. Similarly, the change from image to image could give rise to more complex animations (parts of the image change in a quasi-continuous fashion), morphing (one image transforms in small steps to another image) or zooming (an image gets larger or smaller in steps).

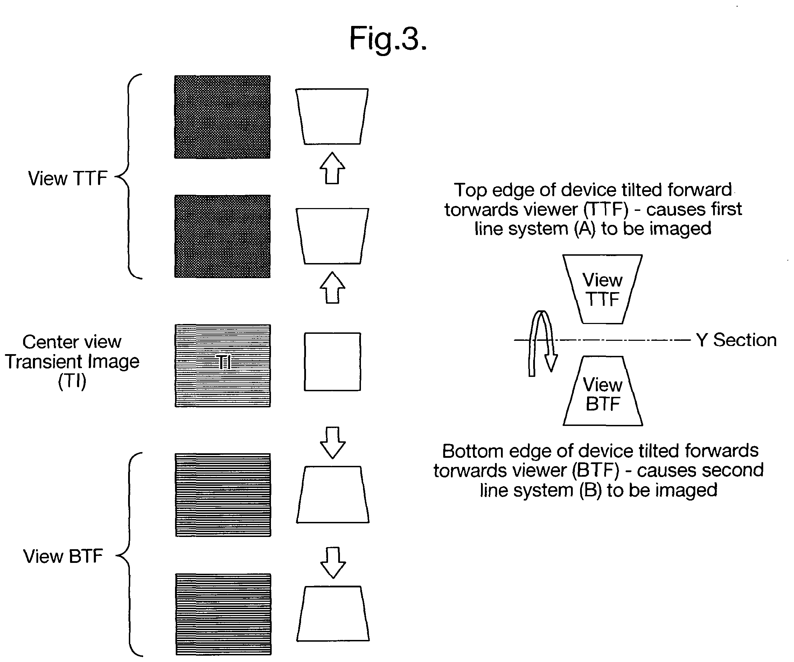

Figure 2 shows the lenticular device in perspective view although for simplicity only two image strips per lens are shown labelled A,B respectively. The appearance of the device shown in Figure 2 to the observer is illustrated in Figure 3. Thus, when the device is arranged with its top tilted forward (view TTF), the image strips A will be seen while when the device is arranged with its bottom tilted forward (view BTF) then the image strips B will be seen.

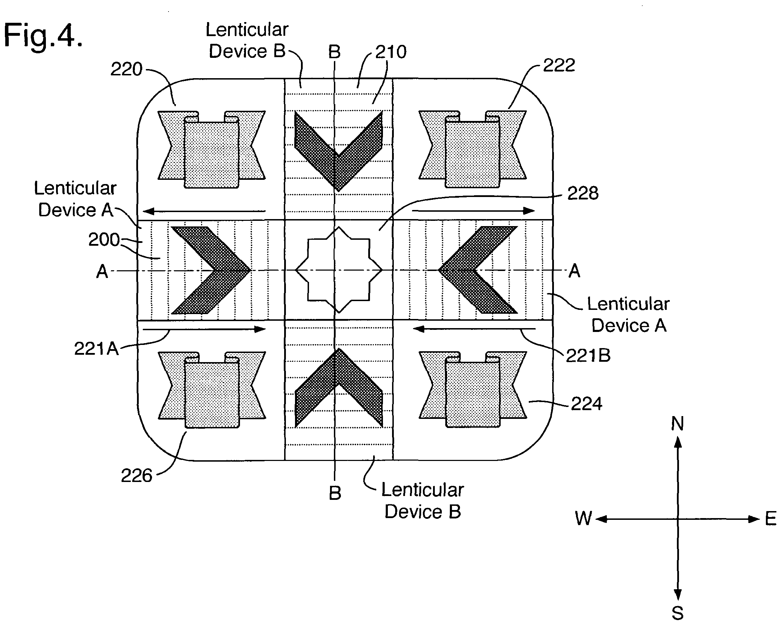

Figure 4 illustrates a first example according to the invention in which there are two sets of cylindrical microlens arrays which are oriented at 90° to each other and located above respective image strips (in a similar way to Figures 1 and 2). In this embodiment lenticular device A has microlenses 200 extending in the north-south direction so that, on east-west tilting, about axis B-B it combines with its image strips to produce an image of a moving chevron along line A-A, each device creating a chevron moving in mutually opposite directions shown by arrows 221A,221B.Lenticular device B has microlenses 210 extending in the east-west direction so that, on north-south tilting about axis A-A it combines with its image strips to create an image of a moving chevron along line B-B, each device creating a chevron moving in mutually opposite directions. In this example there are 2 lenticular devices A spaced apart along the axis A-A and 2 lenticular devices B spaced apart along the axis B-B. Pairs of lenticular devices A,B abut at respective corners. In addition five holographic generating structures 220, 222, 224, 226, 228 are located in the spaces defined between the lenticular devices A,B.

In the example in Figure 4 it should be appreciated that the respective lenticular animations occur only when the security device is tilted around an axis which is perpendicular to the direction in which the cylindrical lens-lets 200,210 exhibit their periodic variations in curvature. In this case the lenticular animation of the chevrons horizontally across the device will occur along the line A-A when the device is tilted around the line B-B. Conversely the lenticular animation of the chevrons vertically across the device will occur along the line B-B when the device is tilted around the line A-A. The animation itself can take place in any direction and is purely dependent on the artwork.

The holographic generating structures 220-228 in Figure 4 can be in the form of holograms or DOVID image elements. In the label construction shown the holographic and lenticular devices are in separate areas, however, it should be understood that this example is purely illustrative and for example the holographic generating structures 220-228 could be located in a central band or strip and the lenticular devices A,B could be located in one or more regions on either side. Alternatively the image provided by the lenticular device and the image provided by the holographic generating structures could be integrated into a single image by each providing components of a single image.

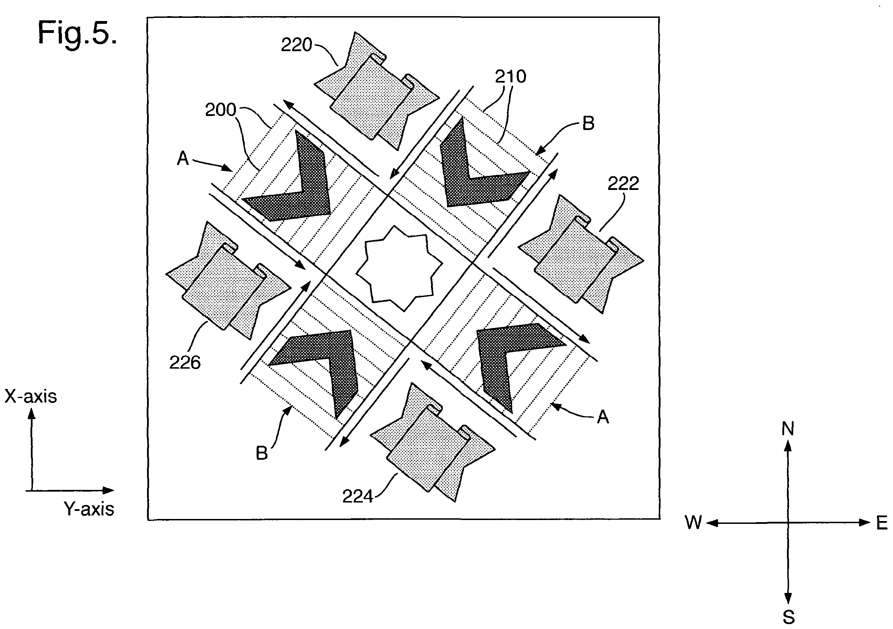

In a preferred embodiment the cylindrical microlens array and the microimage strips are arranged such that for at least one of the lenticular devices the direction the cylindrical lens-lets exhibit their periodic variations in curvature lies at 45 degrees to the x (line A-A in Figure 4) or y- axis (line B-B in Figure 4) or any angle in between which may be deemed advantageous. In some devices the 45 degree angle is particularly advantageous - since documents tend to be tilted only north-south or east-west, the device can appear to move with all tilts. Such a device is illustrated in Figure 5 where although the two sets of cylindrical microlens arrays 200,210 are oriented at 90° to each other they are also both orientated at 45° to the x and y axes of the security device. On tilting the device around either the x or y axis both lenticular devices will exhibit an animation, in this case the chevrons from each of the devices will appear to move towards the centre of the device.

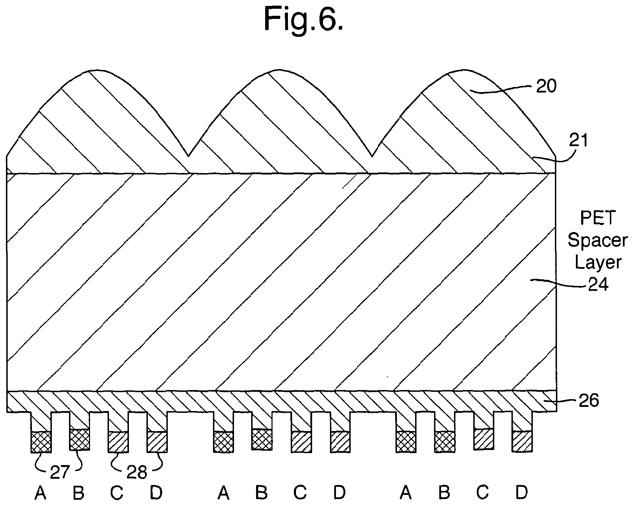

Figure 6 illustrates an example lenticular device suitable for use in the current invention comprising four image strips A-D which are different views of the same image in order to create a lenticular animation effect. In this example the image areas of the strips are creating by creating a series of raised regions or bumps in a resin layer 26 provided on a transparent PET spacer layer 24. A cylindrical lens array 20 is cast cured or embossed into a resin layer 21 on the layer 24. A coloured ink is then transferred onto the raised regions typically using a lithographic, flexographic or gravure process. In the example shown in Figure 6 image strips A and B are printed with one colour 27 and image strips C and D are printed with a second colour 28. In this manner when the device is tilted to create the lenticular animation effect the image will also be seen to change colour as the observer moves from view B to view C. In a different example all of the strips A-D in one region of the device would be one colour and then all a different colour in a second region of the device.

In a further embodiment when the image elements of the strips are formed from diffraction gratings then different image elements within one strip or in different strips can be formed by different gratings. The difference may be in the pitch of the grating or rotation. This can be used to achieve a multicoloured diffractive image which will also exhibit a lenticular optical effect such as an animation. For example, if the image strips creating the chevrons for lenticular device A in the example illustrated in Figure 4 had been created by writing different diffraction tracks for each strip then as the device in Figure 4 is tilted around the line B-B lenticular animation of the chevrons will occur during which the colour of the chevrons will progressively change due to the different diffraction gratings. A preferred method for writing such a grating would be to use electron beam writing techniques or dot matrix techniques.

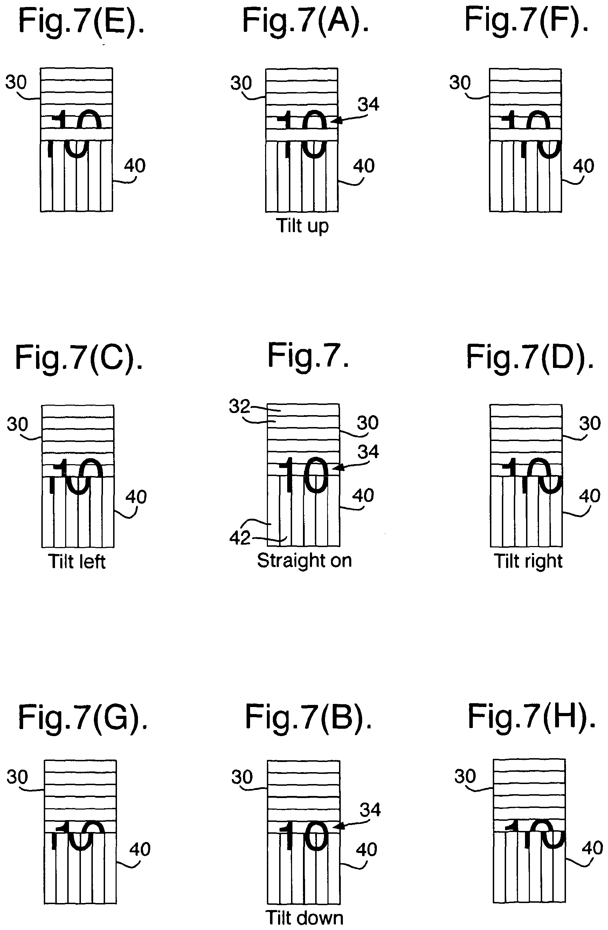

Figures 7 and 7A-7H illustrate another example according to the invention. In this example, two lenticular devices 30,40 are provided abutting one another each having a form similar to that shown in Figures 1 to 3. The lenticular device 30 has cylindrical lenses 32 extending horizontally in Figure 7 while the lenticular device 40 has cylindrical lenses extending vertically and thus orthogonal to the lenses 32.

The image strips under the lenses 32 define an upper half portion 34 of the numeral "10" in such a way that as the lenticular device 30 is tilted about an axis parallel to the lenses 32, the half portion 34 of the symbol "10" will appear to move away or up or towards or down the point of abutment between the lenticular devices. These movements are shown in Figures 7A and 7B respectively.

Under the lenticular lenses 42, image strips are defined representing the lower half portion of the symbol "10" as shown at 44 so that when the device is tilted about the axes of the lenses 42, the lower portion 44 will move to the left or right respectively (Figures 7C and 7D).

In general, the image strips are registered to the lenses but this is not essential.

Figure 7 also illustrates the effect of tilting both up and to the left or right or down and to the left or right in Figures 7E-7H respectively.

It will be readily seen from Figures 7 and 7A-7H that it is easy to determine the presence of the security effect by simply tilting the device and observing that what appeared to be a symbol "10" is then broken up in a simple, predetermined manner.

In the example shown in Figure 7 the symbol "10" is complete when the device is viewed perpendiculary. However the registration between the images and the lenses can be adjusted such that the symbol "10" is complete at another viewing condition when the device is tilted.

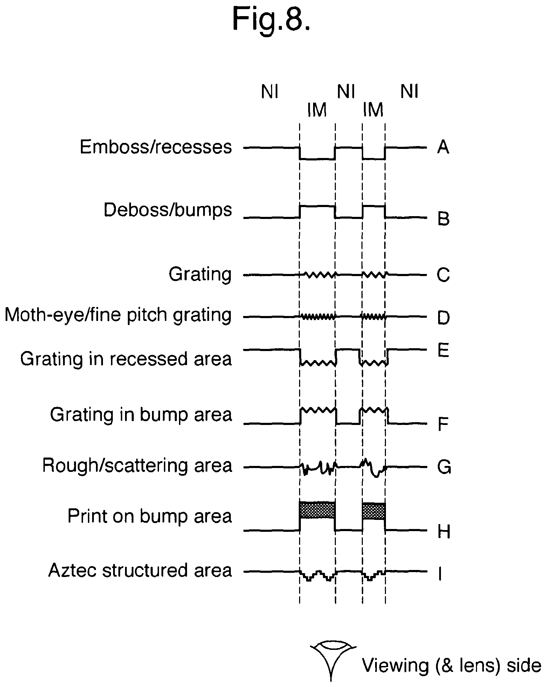

Typically, the image strips are printed as is known while the cylindrical lenses are embossed or cast-cured into a suitable resin layer. However, the image strips can also be formed as a relief structure and a variety of different relief structures suitable for this are shown in Figure 8.

Thus, Figure 8A illustrates image regions of the strips (IM) in the form of embossed or recessed lines while the non-embossed lines correspond to the non-imaged regions of the strips (NI). Figure 8B illustrates image regions of the strips in the form of debossed lines or bumps.

In another approach, the relief structures can be in the form of diffraction gratings (Figure 8C) or moth-eye/fine pitch gratings (Figure 8D).

The recesses or bumps of Figures 8A and 8B can be further provided with gratings as shown in Figures 8E and 8F respectively.

Figure 8G illustrates the use of a simple scattering structure providing an achromatic effect.

Further, as explained above, in some cases the recesses of Figure 8A could be provided with an ink or the debossed regions or bumps could be provided with an ink. The latter is shown in Figure 8H where ink layers 100 are provided on bumps 110.

Figure 8I illustrates the use of an Aztec structure.

Additionally, image and non-image areas could be defined by combinations of different elements types, e.g. the image areas could be formed from moth-eye structures whilst the non-image areas could be formed from a grating. Or even the image and non-image areas could be formed by gratings of different pitch or orientation.

The height or depth of the bumps/recesses is preferably in the range 0.5-10µm and more preferably in the range 1-5µm. Typical widths of the bumps/recesses will be defined by the nature of the artwork but would typically be less than 100µm, more preferably less than 50µm and even more preferably less than 25 microns. The width of the image strip and therefore the width of the bumps or recesses will be dependent on the type of optical effect required for example if the diameter of the focussing elements is 30µm then a simple switch effects between two views A and B could be achieved using 15µm wide image strips. Alternatively for a smooth animation effect it is preferable to have as many views as possible typically at least three but ideally as many as 30, in this case the width of the image strips (and associated bumps or recesses) should be in the range 0.1 - 6µm.

In the case of relief structures, these will be embossed or cast-cured into a suitable resin layer on the opposite side of the substrate to the cylindrical lenses.

Although the lenticular focussing elements are described with reference to cylindrical lenses, other suitable elements include micro-mirrors.

The security device of the current invention can be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

The security device of the current invention may also comprise additional security features such as any desired printed images, metallic layers which may be opaque, semitransparent or screened. Such metallic layers may contain negative or positive indicia created by known demetallisation processes.

Additional optically variable materials can be included in the security device such as thin film interference elements, liquid crystal material and photonic crystal materials. Such materials may be in the form of filmic layers or as pigmented materials suitable for application by printing.

The presence of a metallic layer can be used to conceal the presence of a machine readable dark magnetic layer. When a magnetic material is incorporated into the device the magnetic material can be applied in any design but common examples include the use of magnetic tramlines or the use of magnetic blocks to form a coded structure. Suitable magnetic materials include iron oxide pigments (Fe₂O₃ or Fe₃O₄), barium or strontium ferrites, iron, nickel, cobalt and alloys of these. In this context the term "alloy" includes materials such as Nickel:Cobalt, Iron:Aluminium:Nickel:Cobalt and the like. Flake Nickel materials can be used; in addition Iron flake materials are suitable. Typical nickel flakes have lateral dimensions in the range 5-50 microns and a thickness less than 2 microns. Typical iron flakes have lateral dimensions in the range 10-30 microns and a thickness less than 2 microns.

In an alternative machine-readable embodiment a transparent magnetic layer can be incorporated at any position within the device structure. Suitable transparent magnetic layers containing a distribution of particles of a magnetic material of a size and distributed in a concentration at which the magnetic layer remains transparent are described in WO03091953 and WO03091952.

In a further example the security device of the current invention may be incorporated in a security document such that the device is incorporated in a transparent region of the document. The security document may have a substrate formed from any conventional material including paper and polymer. Techniques are known in the art for forming transparent regions in each of these types of substrate. For example, WO8300659 describes a polymer banknote formed from a transparent substrate comprising an opacifying coating on both sides of the substrate. The opacifying coating is omitted in localised regions on both sides of the substrate to form a transparent region.

EP1141480 describes a method of making a transparent region in a paper substrate. Other methods for forming transparent regions in paper substrates are described in EP0723501, EP0724519, EP1398174 and WO03054297.

## Claims

1. A security device comprising at least two lenticular devices (30,40), each lenticular device having an array of elongate lenticular focusing elements (32), such as cylindrical lenses or micromirrors, located above respective sets of image strips (A,B), wherein the elongate directions are orthogonal, **characterized in that** the two lenticular devices (30,40), when viewed at at least one viewing condition, for example perpendicularly, present a recognisable image to the naked eye of the observer made up by image portions (34,44) from each lenticular device, wherein the image strips define different views of the respective image portion whereby as the security device is tilted about an axis parallel to the elongate direction of either of the lenticular devices, the respective image portion appears to move laterally while the other image portion remains stationary.

2. A security device according to claim 1, wherein the two lenticular devices are arranged adjacent one another and preferably abut one another.

3. A security device according to claim 1 or claim 2, wherein the recognisable image comprises one of a symbol, graphic, or character.

4. A security device according to any of the preceding claims, wherein the image strips (A,B) are registered to the lenticular focusing elements (32).

5. A security device according to any of the preceding claims, wherein the image strips (A,B) are defined by inks.

6. A security device according to any of claims 1 to 4, wherein the image strips (A,B) are defined by a relief structure, typically embossed or cast-cured into a substrate, the relief structure preferably comprising diffractive grating structures.

7. A security device according to any of the preceding claims, wherein the width of each image strip (A,B) is less than 50 microns, preferably less than 20 microns, most preferably in the range 5-10 microns.

8. A security device according to any of the preceding claims, wherein the lenticular focusing element array has aperiodicity in the range 5-200 microns, preferably 10-60 microns, most preferably 20-40 microns.

9. A security device according to any of the preceding claims, wherein the lenticular focusing elements (32) have been formed by a process of thermal embossing or cast-cure replication.

10. An article provided with a security device according to any of the preceding claims, the article preferably being selected from banknotes, cheques, passports, identity cards, certificates of authenticity, fiscal stamps and other documents for securing value or personal identity.

11. An article according to claim 10, wherein the article comprises a substrate with a transparent portion, on opposite sides of which the lenticular focusing elements and image strips respectively are provided.

12. A method of manufacturing a security device, the method comprising providing at least two lenticular devices (30,40), each lenticular device having an array of elongate lenticular focusing elements (32) located above respective sets of image strips (A,B), wherein said elongate directions are orthogonal, **characterized in that** the two lenticular devices (30,40), when viewed at at least one viewing condition, for example perpendicularly, present a recognisable image to the naked eye of the observer made up by image portions (34,44) from each lenticular device, wherein the image strips define different views of the respective image portion whereby as the security device is tilted about an axis parallel to the elongate direction of either of the lenticular devices, the respective image portion appears to move laterally while the other image portion remains stationary.

13. A method according to claim 12, wherein the two lenticular devices (30,40) are arranged adjacent one another and preferably abut one another.

14. A method according to claim 12 or claim 13, for manufacturing a security device according to any of claims 1 to 9.

## Patentansprüche

1. Sicherheitsvorrichtung, umfassend mindestens zwei Linsenvorrichtungen (30, 40), wobei die Linsenvorrichtungen jeweils eine Anordnung von langgestreckten Linsenfokussierungselementen (32), wie etwa zylindrischen Linsen oder Mikrospiegeln, die über jeweiligen Sätzen von Bildstreifen (A, B) angeordnet sind, aufweisen, wobei die Erstreckungsrichtungen orthogonal sind, **dadurch gekennzeichnet, dass** die zwei Linsenvorrichtungen (30, 40) bei Betrachtung unter mindestens einem Betrachtungszustand, zum Beispiel senkrecht, dem bloßen Auge des Betrachters ein erkennbares Bild darbieten, das aus Bildabschnitten (33, 34) von jeder Linsenvorrichtung aufgebaut ist, wobei die Bildstreifen verschiedene Ansichten des jeweiligen Bildabschnitts definieren, wodurch der jeweilige Bildabschnitt, wenn die Sicherheitsvorrichtung um eine zu der Erstreckungsrichtung einer der Linsenvorrichtungen parallele Achse gekippt wird, sich seitlich zu bewegen scheint, während der andere Bildabschnitt stationär bleibt.

2. Sicherheitsvorrichtung nach Anspruch 1, wobei die zwei Linsenvorrichtungen einander benachbart angeordnet sind und vorzugsweise aneinander angrenzen.

3. Sicherheitsvorrichtung nach Anspruch 1 oder Anspruch 2, wobei das erkennbare Bild eines von einem Symbol, einer Grafik oder einem Schriftzeichen entspricht.

4. Sicherheitsvorrichtung nach einem der vorangehenden Ansprüche, wobei sich die Bildstreifen (A, B) mit den Linsenfokussierungselementen (32) decken.

5. Sicherheitsvorrichtung nach einem der vorangehenden Ansprüche, wobei die Bildstreifen (A, B) von Druckfarben definiert werden.

6. Sicherheitsvorrichtung nach einem der Ansprüche 1 bis 4, wobei die Bildstreifen (A, B) von einer Reliefstruktur definiert werden, die typischerweise in ein Substrat geprägt oder gussgehärtet ist, wobei die Reliefstruktur vorzugsweise Beugungsgitterstrukturen umfasst.

7. Sicherheitsvorrichtung nach einem der vorangehenden Ansprüche, wobei die Breite jedes Bildstreifens (A, B) weniger als 50 Mikrometer beträgt, vorzugsweise weniger als 20 Mikrometer, und am besten im Bereich von 5-10 Mikrometern liegt.

8. Sicherheitsvorrichtung nach einem der vorangehenden Ansprüche, wobei die Linsenfokussierungselementanordnung eine Periodizität im Bereich von 5-200 Mikrometern aufweist, vorzugsweise 10-60 Mikrometern, am besten 20-40 Mikrometern.

9. Sicherheitsvorrichtung nach einem der vorangehenden Ansprüche, wobei die Linsenfokussierungselemente (32) durch einen Prozess der Vervielfältigung durch Warmprägen oder Gusshärten gebildet worden sind.

10. Artikel, der mit einer Sicherheitsvorrichtung nach einem der vorangehenden Ansprüche versehen ist, wobei der Artikel vorzugsweise aus Banknoten, Schecks, Reisepässen, Identitätskarten, Echtheitszertifikaten, Finanzmarken und anderen Dokumenten zum Sichern von Wert oder persönlicher Identität ausgewählt ist.

11. Artikel nach Anspruch 10, wobei der Artikel ein Substrat mit einem transparenten Abschnitt umfasst, auf dessen gegenüberliegenden Seiten jeweils die Linsenfokussierungselemente bzw. die Bildstreifen bereitgestellt sind.

12. Verfahren zum Herstellen einer Sicherheitsvorrichtung, wobei das Verfahren das Bereitstellen von mindestens zwei Linsenvorrichtungen (30, 40) umfasst, wobei die Linsenvorrichtungen jeweils eine Anordnung von langgestreckten Linsenfokussierungselementen (32), die über jeweiligen Sätzen von Bildstreifen (A, B) angeordnet sind, aufweisen, wobei die Erstreckungsrichtungen orthogonal sind, **dadurch gekennzeichnet, dass** die zwei Linsenvorrichtungen (30, 40) bei Betrachtung unter mindestens einem Betrachtungszustand, zum Beispiel senkrecht, dem bloßen Auge des Betrachters ein erkennbares Bild darbieten, das aus Bildabschnitten (34, 44) von jeder Linsenvorrichtung aufgebaut ist, wobei die Bildstreifen verschiedene Ansichten des jeweiligen Bildabschnitts definieren, wodurch der jeweilige Bildabschnitt, wenn die Sicherheitsvorrichtung um eine zu der Erstreckungsrichtung einer der Linsenvorrichtungen parallele Achse gekippt wird, sich seitlich zu bewegen scheint, während der andere Bildabschnitt stationär bleibt.

13. Verfahren nach Anspruch 12, wobei die zwei Linsenvorrichtungen (30, 40) einander benachbart angeordnet sind und vorzugsweise aneinander angrenzen.

14. Verfahren nach Anspruch 12 oder Anspruch 13 zum Herstellen einer Sicherheitsvorrichtung nach einem der Ansprüche 1 bis 9.

## Revendications

1. Dispositif de sécurité comprenant au moins deux dispositifs lenticulaires (30, 40), chaque dispositif lenticulaire ayant une série d'éléments de focalisation lenticulaires allongés (32) tels que des lentilles ou des micromiroirs cylindriques, situés au-dessus d'ensembles respectifs de bandes d'images (A, B), les directions allongées étant orthogonales, **caractérisé en ce que** les deux dispositifs lenticulaires (30, 40), quand on les observe dans au moins une condition d'observation, par exemple perpendiculairement, présentent une image reconnaissable à l'oeil nu de l'observateur constituée par des parties d'image (33, 44) venant de chaque dispositif lenticulaire, ces bandes d'image définissant des vues différentes de la partie graphique d'image respective, ce qui fait que, lorsque le dispositif de sécurité est incliné autour d'un axe parallèle à la direction allongée de l'un ou l'autre des dispositifs lenticulaires, la partie d'image respective semble bouger latéralement tandis que l'autre partie d'image reste fixe.

2. Dispositif de sécurité selon la revendication 1, dans lequel les deux dispositifs lenticulaires sont disposés de façon adjacente l'un à l'autre et de préférence sont contigus l'un à l'autre.

3. Dispositif de sécurité selon la revendication 1 ou la revendication 2, dans lequel l'image reconnaissable consiste en soit un symbole, soit un élément graphique, soit un caractère.

4. Dispositif de sécurité selon l'une quelconque des revendications précédentes, dans lequel les bandes d'image (A, B) sont mises en correspondance avec les éléments de focalisation lenticulaires (32).

5. Dispositif de sécurité selon l'une quelconque des revendications précédentes, dans lequel les bandes d'image (A, B) sont définies par des encres.

6. Dispositif de sécurité selon l'une quelconque des revendications 1 à 4, dans lequel les bandes d'image (A, B) sont définies par une structure en relief, généralement gaufrée ou coulée-polymérisée dans un substrat, cette structure en relief comportant de préférence des structures à réseau de diffraction.

7. Dispositif de sécurité selon l'une quelconque des revendications précédentes, dans lequel la largeur de chaque bande d'image (A, B) est moins que 50 microns, de préférence moins que 20 microns, idéalement située dans la plage de 5 à 10 microns.

8. Dispositif de sécurité selon l'une quelconque des revendications précédentes, dans lequel la série d'éléments de focalisation lenticulaires a une périodicité située dans la plage de 5 à 200 microns, de préférence de 10 à 60 microns, idéalement de 20 à 40 microns.

9. Dispositif de sécurité selon l'une quelconque des revendications précédentes, dans lequel les éléments de focalisation lenticulaires (32) ont été formés par un processus de gaufrage thermique ou de réplication par coulée-polymérisation.

10. Article pourvu d'un dispositif de sécurité selon l'une quelconque des revendications précédentes, cet article étant sélectionné de préférence parmi les billets de banque, les chèques, les passeports, les cartes d'identité, les certificats d'authenticité, les timbres fiscaux et d'autres documents pour authentifier la valeur ou l'identité personnelle.

11. Article selon la revendication 10, cet article comprenant un substrat avec une partie transparente, sur les côtés opposés duquel les éléments de focalisation lenticulaires et les bandes d'image sont prévus respectivement.

12. Procédé de fabrication d'un dispositif de sécurité, ce procédé comprenant la prévision d'au moins deux dispositifs lenticulaires (30, 40), chaque dispositif lenticulaire ayant une série d'éléments de focalisation lenticulaires allongés (32) situés au-dessus d'ensembles respectifs de bandes d'images (A, B), lesdites directions allongées étant orthogonales, **caractérisé en ce que** les deux dispositifs lenticulaires (30, 40), quand on les observe dans au moins une condition d'observation, par exemple perpendiculairement, présentent une image reconnaissable à l'oeil nu de l'observateur constituée par des parties d'image (34, 44) venant de chaque dispositif lenticulaire, les bandes d'image définissant des vues différentes de la partie d'image respective, ce qui fait que, lorsque le dispositif de sécurité est incliné autour d'un axe parallèle à la direction allongée de l'un ou l'autre des dispositifs lenticulaires, la partie d'image respective semble bouger latéralement tandis que l'autre partie d'image reste fixe.

13. Procédé selon la revendication 12, dans lequel les deux dispositifs lenticulaires (30, 40) sont disposés de façon adjacente l'un à l'autre et de préférence sont contigus l'un à l'autre.

14. Procédé selon la revendication 12 ou la revendication 13, pour fabriquer un dispositif de sécurité selon l'une quelconque des revendications 1 à 9.
